Europäisches Patentamt

European Patent Office

Office européen des brevets

(11) Veröffentlichungsnummer: **0 036 952**
**A1**

(12) **EUROPÄISCHE PATENTANMELDUNG**

(21) Anmeldenummer: 81101443.0

(22) Anmeldetag: 27.02.81

(51) Int. Cl.³: **C 23 G 3/00**
 **D 06 F 31/00, A 23 N 12/00**
 **B 08 B 3/02**

(30) Priorität: 25.03.80 DE 3011517

(43) Veröffentlichungstag der Anmeldung:
 07.10.81 Patentblatt 81/40

(84) Benannte Vertragsstaaten:
 CH DE FR GB IT LI SE

(71) Anmelder: Anton Huber GmbH & Co. KG
 Angerstrasse 16
 D-8050 Freising(DE)

(72) Erfinder: Rütten, Werner
 Albrecht-Dürer-Strasse 29
 D-4006 Erkrath(DE)

(74) Vertreter: von Bezold, Dieter, Dr. et al,
 Patentanwälte Dr. D. von Bezold, Dipl.-Ing. P. Schütz,
 Dipl.-Ing. W. Heusler Maria-Theresia-Strasse 22
 Postfach 86 02 60 D-8000 München 86(DE)

(54) **Kontinuierlich arbeitende Hochdruck-Wasch- und Spülanlage.**

㊼ Eine kontinuierlich arbeitende Hochdruck-Wasch- und Spülanlage für empfindliche Kleinteile, wie Gummistopfen für pharmazeutische Präparate, die extrem partikelfrei sein müssen, weist eine Reinigungstrommel (10) auf, welche um eine im wesentlichen horizontale Achse drehbar gelagert und mit einer Antriebsvorrichtung (16), die ein stufenlos verstellbares Getriebe enthält, gekoppelt und in einem mit einer Absaugvorrichtung versehenen Gehäuse angeordnet ist. Die Reinigungstrommel (10) besteht zumindest in einem mittleren Teil (10c) aus im Abstand voneinander angeordneten, im wesentlichen achsparallel verlaufenden Stäben und weist eine an der Innenseite angebrachte Förderschnecke (18) auf. Im Inneren der in eine Waschzone (22) und eine Spülzone (24) unterteilten Reinigungstrommel (10) befindet sich eine Spritzrohranordnung (20a, 20b), denen jeweils eine Auffangwanne und ein eigener Flüssigkeitskreislauf zugeordnet sind. Die zu reinigenden Kleinteile werden durch eine Zuführungsvorrichtung (76) in einer begrenzten Anzahl pro Umdrehung der Trommel dosiert in ein Eintrittsende der Trommel eingeführt.

./...

PATENTANWÄLTE
DR. DIETER v. BEZOLD
DIPL. ING. PETER SCHÜTZ
DIPL. ING. WOLFGANG HEUSLER
MARIA-THERESIA-STRASSE 22
POSTFACH 86 02 60
D-8000 MUENCHEN 86

ZUGELASSEN BEIM
EUROPÄISCHEN PATENTAMT

EUROPEAN PATENT ATTORNEYS

MANDATAIRES EN BREVETS EUROPÉENS

TELEFON 089/47 06 006
TELEX 522 638
TELEGRAMM SOMBEZ

**0036952**

10756/EP/Dr.v.B/Ro.

Anton Huber GmbH & Co. KG
Angerstraße 16, D-8050 Freising

Kontinuierlich arbeitende Hochdruck-Wasch- und Spülanlage.

Die vorliegende Erfindung betrifft eine kontinuierlich arbeitende Hochdruck-Wasch- und Spülanlage für empfindliche Kleinteile, insbesondere für pharmazeutische Verschlußelemente, bei denen eine extreme Partikelfreiheit gefordert wird.

Bei Gummistopfen und anderen Verschlußelementen für Blutkonserven, Infusionsflüssigkeiten und andere für die parenterale Anwendung bestimmte Flüssigkeiten wird eine extreme Freiheit von anhaftenden Fremdkörpern (Partikeln) gefordert. Die normalerweise aus einem gummielastischen Material bestehenden Verschlußelemente müssen daher nach der Herstellung gründlich gereinigt werden.

Aus DE 21 25 102 A1 ist bereits eine Einrichtung zum Reinigen von empfindlichen Kleinteilen, wie Gummiteilen für die pharmazeutische Industrie bekannt, die eine Waschtrommel enthält, welche in einem dichtverschließbaren Außenbehälter drehbar gelagert ist, der zur Aufnahme einer Waschflüssigkeit dient. Bei einer solchen Einrichtung werden jedoch verhältnismäßig große Mengen an Waschflüssigkeit bzw. viele Spülgänge benötigt, um die Partikelzahl auf die geforderten Werte herabzusetzen.

Da die Anforderungen an die Partikelfreiheit ständig gestiegen sind, hat man in jüngerer Zeit Reinigungsgeräte für pharmazeutische Verschlußelemente entwickelt, bei denen die Verschlußelemente einzeln gehaltert und behandelt werden (Journal of the Parenteral Drug Association, Band 33, Nr. 2 (1979) S. 96-103). Nachteilig an diesen Einrichtungen ist, daß nur kleine Durchsätze (Anzahl der behandelten Verschlußelemente pro Zeiteinheit) erreicht werden können, daß sie für jede Verschlußelementgröße jeweils umgerüstet werden müssen, und daß sie konstruktiv aufwendig und damit verhältnismäßig teuer und störanfällig sind.

Der vorliegenden Erfindung liegt die Aufgabe zugrunde, eine Anlage der eingangs genannten Art anzugeben, die relativ große Durchsätze an zu reinigenden Kleinteilen zu erreichen gestattet, eine sehr hohe Partikelfreiheit gewährleistet und konstruktiv einfach, preiswert und betriebssicher ist.

Diese Aufgabe wird erfindungsgemäß durch eine kontinuierlich arbeitende Hochdruck-Wasch- und Spülanlage gelöst, die gekennzeichnet ist durch
a) eine Reinigungstrommel, welche um eine im wesentlichen horizontale Achse drehbar gelagert sowie mit einer Antriebsvorrichtung gekoppelt ist, zumindest in einem mittleren Teil aus im Abstand voneinander angeordneten, im wesentlichen achsparallel verlaufenden Stäben besteht und eine an der Innenseite angebrachte Förderschnecke enthält;
b) eine sich in das Innere der Reinigungstrommel erstreckende Spritzrohranordnung, und

c) eine Vorrichtung zum dosierten Einführen einer begrenzten Anzahl der zu reinigenden Kleinteile pro Umdrehung der Trommel in ein Eintrittsende der Trommel.

Weiterbildungen und vorteilhafte Ausgestaltungen der erfindungsgemäßen Anlage sind Gegenstand von Unteransprüchen.

Mit der erfindungsgemäßen Anlage lassen sich pro Zeiteinheit verhältnismäßig viele Kleinteile reinigen, die Reinigung ist außerordentlich gründlich und trotzdem sehr schonend, so daß die gereinigten Kleinteile weitestgehend frei von anhaftenden Partikeln sind; die erfindungsgemäße Anlage ist außerdem konstruktiv einfach, so daß sie preisgünstig hergestellt werden kann sowie wartungsfreundlich und wenig störanfällig ist.

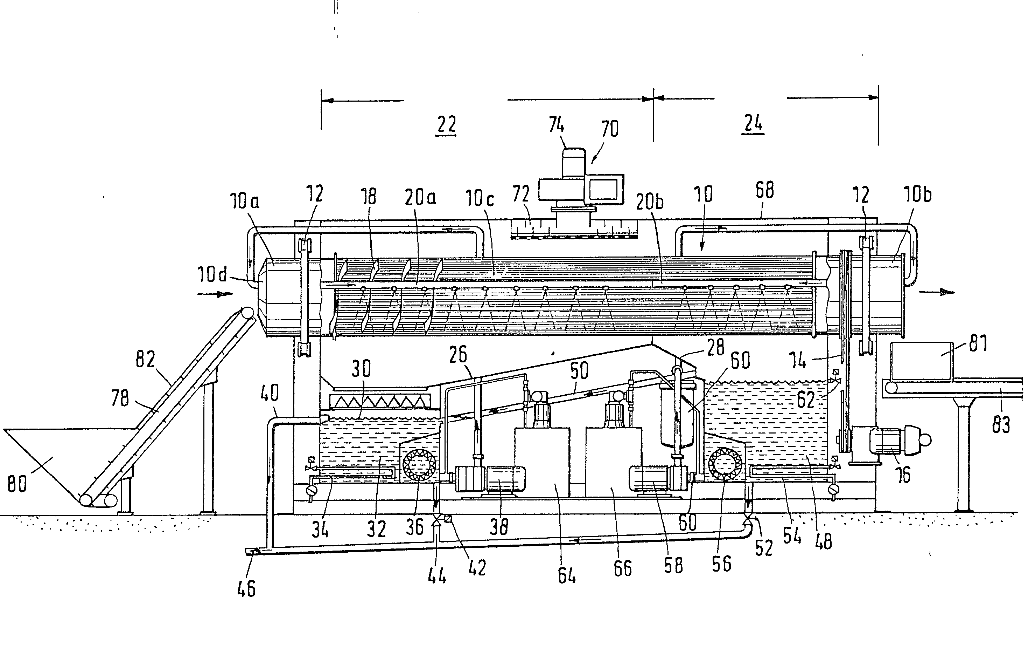

Im folgenden wird ein Ausführungsbeispiel der Anlage gemäß der Erfindung anhand der Zeichnung näher erläutert, die eine teilweise geschnittene, etwas vereinfachte Seitenansicht einer Anlage gemäß einer bevorzugten Ausführungsform der Erfindung zeigt.

Die in der Zeichnung dargestellte kontinuierlich arbeitende Hochdruck-Wasch- und Spülanlage, die im folgenden kurz als "Reinigungsmaschine" bezeichnet werden soll, enthält eine Reinigungstrommel 10, die in der Nähe ihrer Enden durch zwei Lagerungen 12 um eine im wesentlichen horizontale Achse drehbar gelagert ist. Die Trommel 10 ist über ein Keilriemengetriebe 14 mit einem Antriebsaggregat 16 gekuppelt, das einen Elektromotor und ein Untersetzungsgetriebe enthält.

Der Mantel der Reinigungstrommel 10 enthält einen vorderen und einen hinteren rohrförmigen, geschlossenen Teil 10a bzw. 10b sowie einen mittleren, durchbrochenen Teil 10c, der aus achsparallelen, beabstandeten Rundstäben besteht. Der Abstand benachbarter Rundstäbe ist so gewählt, daß die Kleinteile, für deren Reinigung die Maschine bestimmt ist, zwischen den Stäben nicht hindurchfallen und sich nicht verklemmen können.

Am einlaßseitigen Ende ist das rohrförmige Teil 10a der Trommel mit einer kegelstumpfförmigen Verengung 10d versehen, die ein Herausfallen der in dieses Ende eingeführten, zu reinigenden Kleinteile verhindert.

Mit der Innenseite der Reinigungstrommel 10 ist eine wendelförmige Förderschnecke 18 verbunden, die sich im wesentlichen über die ganze Länge der Reinigungstrommel erstreckt, in der Zeichnung jedoch nur zum Teil dargestellt ist. Die Förderschnecke besteht aus einem wendelförmigen, hochkant stehenden Metallstreifen mit abgerundeten Kanten.

Im Inneren der Reinigungstrommel ist eine aus zwei Teilen 20a und 20b bestehende Spritzrohranordnung angeordnet, die innerhalb des mittleren, aus dem Stabmantel bestehenden Teil 10c der Trommel eine Anzahl von nach unten gerichteter Spritzdüsen aufweist.

Der mittlere, durch den Stabmantel gebildete Teil der Reinigungstrommel 10 ist in zwei Zonen aufgeteilt, nämlich eine Waschzone 22 und eine Spülzone 24. Unterhalb der Zonen 22 und 24 befinden sich Auffangwannen 26 bzw. 28. Die Auffangwanne 26 hat einen Auslaß, der über ein schubladenartig ausgebildetes Grobfilter 30 zu einem Waschflottenbehälter 32 führt. Im Waschflottenbehälter 32 ist eine Heizschlange 34 angeordnet, die mit einer Dampfleitung verbunden ist. Der Waschflottenbehälter 32 ist über ein Feinfilter 36 mit dem Einlaß einer Hochdruckpumpe 38 verbunden, deren Auslaßdruck 10 bis 15 bar beträgt. Der Auslaß der Hochdruckpumpe 38 ist an den sich in der Waschzone 22 befindenden ersten Teil 20a der Spritzrohranordnung angeschlossen. Der Waschflottenbehälter ist ferner mit einer Überlaufleitung 40 und einer ein Absperrventil 42 enthaltenden Ablaßleitung 44 verbunden, die in einer Abwasserleitung 46 münden.

Die Auffangwanne 28 mündet in einen Spülflottenbehälter 48, der über eine Überlaufleitung 50 mit dem Waschflottenbehälter 32 verbunden ist und eine mit einem Absperrventil 52 versehene, in der Abwasserleitung 46 mündende Ablaßleitung aufweist. Der Spülflottenbehälter 48 enthält ferner eine Heizschlange 54, die mit einer Dampfleitung verbunden ist, und ist über ein Feinfilter 56 mit dem Einlaß einer Umwälzpumpe 58 verbunden, die einen Auslaßdruck von z.B. 10 bis 15 bar haben kann und mit ihrem Auslaß über ein Mikrofilter 60 mit dem sich in der Spülzone 24 befindenden zweiten Teil 20b der Spritzrohranordnung verbunden ist. Der Spülflottenbehälter 48 ist ferner über ein Einlaßventil 62 mit einer Frischwasserzuführungsleitung (nicht dargestellt) verbunden.

Mit dem Einlaß der Hochdruckpumpe 38 ist eine Dosiervorrichtung 64 zur dosierten Waschmittelzuführung verbunden. Mit dem Einlaß der Umwälzpumpe 58 kann eine entsprechende Dosiervorrichtung 66 zur Zuführung von Silicon oder einem anderen Behandlungsmittel verbunden sein.

Der durchbrochene mittlere Teil 10c der Reinigungstrommel 10, die Auffangwannen 26 und 28 sowie die Behälter 32 und 48 sind in einem im wesentlichen geschlossenen Gehäuse 68 untergebracht, das das Entweichen von Dämpfen in die Umgebung verhindert. An der Decke des Gehäuses ist oberhalb der Reinigungstrommel eine Dunstabsaugvorrichtung 70 vorgesehen, welche einen Tropfenabscheider 72 und einen Dunstabsaugventilator 74 enthält.

Am einlaßseitigen Ende der Reinigungstrommel ist eine Zuführungsvorrichtung 76 für die zu reinigenden Kleinteile, wie Gummistopfen und dergleichen zum Verschließen von Flaschen für pharmazeutische Flüssigkeiten, angeordnet. Die Zuführungsvorrichtung ist so ausgebildet, daß die zu reinigenden Kleinteile (nicht dargestellt) mit kontrollierter Menge pro Umdrehung der Trommel 10 zugeführt werden, so daß in jede Windung der Förderschnecke 18 nur eine bestimmte, relativ kleine Menge der zu reinigenden Kleinteile gelangt, die so bemessen ist, daß sich die Kleinteile gegenseitig praktisch nicht nennenswert reiben. Insbesondere soll die Innenfläche der Trommel nur im wesentlichen mit einer einzigen Lage der Kleinteile bedeckt sein.

Bei dem dargestellten Ausführungsbeispiel enthält die Zuführungsvorrichtung ein mit Quersprossen versehenes Förderband 78, dessen unteres Ende sich in einem Aufgabetrichter 80 befindet und dessen sich oberhalb des Aufgabetrichters 80 befindlicher Teil in einer rohrartigen Führung 82 läuft, die die Menge der zwischen zwei Sprossen transportierten Teile begrenzt. Vom oberen Ende des Förderbandes 78 fallen die Teile dann in das verengte Einlaßende 10a, 10b der Trommel und werden dann durch die Förderschnecke 18 zum Auslaßende gefördert, wo sie in einen Auffangkasten 81 fallen und aus diesem durch ein zweites Förderband 83 zu einer Sterilisiervorrichtung oder dergleichen transportiert werden.

Die beschriebene Durchlauf-Reinigungsmaschine arbeitet folgendermaßen: Das Beladen der Reinigungstrommel 10 mit den zu reinigenden Kleinteilen erfolgt durch das mit den Stegen versehene Förderband 78, dessen Antrieb durch eine nicht dargestellte Taktsteuerung bezüglich der Drehzahl der Reinigungstrommel 10 so gesteuert wird, daß nur eine ganz bestimmte, begrenzte Anzahl von Kleinteilen, z.B. Gummistopfen, je Windung der Förderschnecke eingeführt werden. Diese Begrenzung der pro Windung der Förderschnecke eingebrachten Teilezahl hat einen direkten Einfluß auf den Reinigungseffekt. Der Dunstabsaugventilator 74 sorgt dafür, daß weder auf der Einlaßseite noch auf der Auslaßseite ein Wassernebel aussprüht, da durch diesen Ventilator im Gehäuse 68 ein Unterdruck erzielt wird.

Die Reinigungstrommel 10 (Stabtrommel) wird durch das Antriebsaggregat 16 mit einer stufenlos einstellbaren Drehzahl angetrieben. Durch den ersten Teil 20a der Spritzrohranordnung wird Waschflotte unter einem hohen Druck von z.B. 10 bis 15 bar auf das in der Stabtrommel befindliche Waschgut gespritzt, wodurch Schmutz, Abfallreste und Partikel entfernt und sofort in die Auffangwanne 26 transportiert werden. Das Waschwasser wird durch das Grobfilter 30 und das Feinfilter 36 relativ partikelarm gehalten.

In der Spülzone 24 wird das Waschgut mit partikelfreiem Wasser überspült. Auch hier tritt die Spülflüssigkeit, nachdem sie mit den zu reinigenden Kleinteilen in Berührung gekommen ist, sofort in die Auffangwanne 28 aus, so daß eine Rückverschmutzung nicht eintreten kann. Die Spülflüssigkeit wird dann durch das Feinfilter 56 und das Mikrofilter 60 von allen mitgeführten Partikeln befreit und dann wieder dem zweiten Teil 20b der Spritzrohranordnung zugeführt.

Die Spülflüssigkeit wird durch den zweiten Teil 20b der Spritzrohranordnung vorzugsweise ebenfalls unter hohem Druck, wie 10 bis 15 bar, auf die zu reinigenden Teile gesprüht. Dadurch, daß sich infolge der dosierten Aufgabe durch die Zuführungsvorrichtung 76 in jeder Windung der Förderschnecke 18 nur relativ wenige Teile befinden und die Teile in der Spülzone 24 mit partikelfreier Spülflüssigkeit unter hohem Druck behandelt werden, kommt die Reinigungswirkung der einer Einzelbehandlung gleich. Durch die langsame Drehzahl und die begrenzte Anzahl der Kleinteile tritt beim Behandlungsprozeß auch kein neuer Abrieb auf.

Durch die Dosiervorrichtung 64 kann der Waschflotte in durch die Taktsteuerung bestimmten Abständen ein Reinigungs- oder Netzmittel zugegeben werden. Durch die Dosiervorrichtung 66 kann der Spülflüssigkeit reines Siliconöl in einem vorher genau festgelegten Mischungsverhältnis zugegeben werden. Die Dosiervorrichtung 66 wird durch die nicht dargestellte Taktsteuerung so gesteuert, daß nur so viel Siliconöl zugeführt wird, wie die Oberfläche der zu behandelnden Kleinteile aufzunehmen vermag. Ein unerwünschtes Anreichern von Siliconöl in der Spülflotte wird dadurch vermieden und eine gleichmäßige Verteilung des Siliconöls gewährleistet.

Die Maschine arbeitet vollautomatisch unter Steuerung durch ein einstellbares Programmschaltwerk (Programmsteuerung), das durch einen Lochstreifen steuerbar sein kann. Auf diese Weise ist es möglich, die einzelnen Prozesse je nach den Erfordernissen optimal auszulegen.

Ein praktisches Ausführungsbeispiel der Erfindung hatte die folgenden technischen Daten:

| | |
|---|---|
| Waschgutdurchsatz | 100 - 300 kg/Stunde |
| Durchlaufzeit | 8 - 15 Min. |
| Trommeldurchmesser | 500 mm |
| Trommellänge | 3000 mm |
| Drehzahl der Trommel | 0,8 - 4 U/min |
| Saugleistung des Ventilators 76 | 1000 m$^3$/h |
| Hochdruckpumpe 38 | 10 kW |
| Umwälzpumpe 58 | 3 kW |
| Wasserverbrauch | ca. 500 1/h |
| Beheizung: Hochdruckdampf | |

10756/EP/Dr.v.B/Ro.

Anton Huber GmbH & Co. KG
Angerstraße 16, D-8050 Freising

Kontinuierlich arbeitende Hochdruck-Wasch- und Spülanlage.

P a t e n t a n s p r ü c h e

1.) Kontinuierlich arbeitende Hochdruck-Wasch- und Spülanlage für empfindliche Kleinteile, wie pharmazeutische Verschlußelemente, g e k e n n z e i c h n e t  d u r c h

a) eine Reinigungstrommel (10), welche um eine im wesentlichen horizontale Achse drehbar gelagert sowie mit einer Antriebsvorrichtung (16) gekoppelt ist, zumindest in einem mittleren Teil (10c) aus im Abstand voneinander angeordneten, im wesentlichen achsparallel verlaufenden Stäben besteht und eine an der Innenseite angebrachte Förderschnecke (18) enthält;

b) eine sich in das Innere der Reinigungstrommel (10) erstreckende Spritzrohranordnung (20a, 20b), und

c) eine Vorrichtung (76) zum dosierten Einführen einer begrenzten Anzahl der zu reinigenden Kleinteile pro Umdrehung der Trommel in ein Eintrittsende der Trommel.

2.) Anlage nach Anspruch 1, d a d u r c h  g e k e n n z e i c h - n e t , daß die Förderleistung der Einführungsvorrichtung (76) und die Drehzahl der Reinigungstrommel (10) getrennt steuerbar sind.

3.) Anlage nach Anspruch 1 oder 2, d a d u r c h  g e k e n n - z e i c h n e t , daß die Einführungsvorrichtung (76) ein mit Quersprossen versehenes Förderband (78) enthält.

4.) Anlage nach Anspruch 1, 2 oder 3, d a d u r c h  g e k e n n - z e i c h n e t , daß die Enden der Reinigungstrommel (10) rohrförmige, durchbrechungslose Teile (10a, 10b) aufweist, die jeweils mit einer Lagerung (12) versehen sind.

5.) Anlage nach Anspruch 4, d a d u r c h  g e k e n n z e i c h - n e t , daß der aus den Stäben bestehende Teil (10c) der Reinigungstrommel (10) in einem Gehäuse (68) angeordnet ist, welches eine Dunstabzugsvorrichtung (70) aufweist, und daß die rohrförmigen Teile (10a, 10b) aus dem Gehäuse herausragen.

6.) Anlage nach einem der Ansprüche 1 bis 5, d a d u r c h  g e - k e n n z e i c h n e t , daß der aus den Stäben gebildete Teil (10c) der Reinigungstrommel (10) in eine Waschzone (22) und eine Spülzone (24) unterteilt ist, denen jeweils ein eigener Flüssigkeitskreislauf (32, 38, 20a, 26 bzw. 48, 58, 20b, 28) zugeordnet ist.

7.) Anlage nach Anspruch 6, d a d u r c h  g e k e n n z e i c h - n e t , daß jeder Flüssigkeitskreislauf einen Teil der Spritzrohranordnung (20a bzw. 20b), eine unter dieser angeordnete Auffangwanne (26 bzw. 28), einen Flüssigkeitsbehälter (32 bzw. 48), eine Umwälzpumpe (38 bzw. 58) und eine Filteranordnung (30, 36 bzw. 56, 60) enthält.

8.) Anlage nach Anspruch 7, d a d u r c h  g e k e n n z e i c h - n e t , daß in Förderrichtung der zu reinigenden Kleinteile gesehen zuerst eine Waschzone (22) kommt, die sich über etwa zwei Drittel der Länge des aus den Stäben gebildeten Teiles (10c) der Reinigungstrommel erstreckt und daß der Rest dieses Abschnittes von einer Spülzone (24) eingenommen wird.

9.) Anlage nach einem der Ansprüche 6 bis 8, d a d u r c h  g e - k e n n z e i c h n e t , daß zumindest der Flüssigkeitskreislauf, der der in Förderrichtung der Kleinteile zuerst durchlaufenen Zone (22) zugeordnet ist, eine Hochdruckpumpe (38) enthält, welche einen Auslaßdruck von größenordnungsmäßig mindestens 10 bar aufweist.

10.) Anlage nach Anspruch 7, 8 oder 9, d a d u r c h   g e k e n n - z e i c h n e t ,  daß der Behälter (48) der von den zu reinigenden Kleinteilen zuletzt durchlaufenen Zone (24) an eine Frischwasserzuführungsleitung angeschlossen und über eine Überlaufleitung (50) mit dem anderen Behälter (32) verbunden ist.

11.) Anlage nach einem der Ansprüche 6 bis 10, d a d u r c h   g e k e n n z e i c h n e t ,  daß mindestens einem der Flüssigkeitskreisläufe eine Dosiervorrichtung (64 bzw. 66) zum dosierten Zusetzen eines Behandlungsmittels zu der in dem betreffenden Flüssigkeitskreislauf zirkulierenden Flüssigkeit versehen ist.

12.) Anlage nach einem der Ansprüche 7 bis 11, d a d u r c h   g e k e n n z e i c h n e t ,  daß die Zuführung von frischer Flüssigkeit und das Ablassen gebrauchter Flüssigkeit in bzw. aus den Flüssigkeitskreisläufen durch eine Taktsteuerung steuerbar ist.

0036952

1/1

0036952

Nummer der Anmeldung

EP 81 10 1443

Europäisches Patentamt

EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>GB - A - 1 023 221</u> (NOVOTECHNICS LTD.)<br><br>* Seite 1, Zeilen 9-86; Seite 2, Zeilen 1-101; Figuren 1,2 *<br><br>-- | 1-4, 10 |
| X | <u>US - A - 4 073 301</u> (MACKINNON R.I.)<br><br>* Vorderseite; Spalte 3, Zeilen 26-68; Spalte 4, Zeilen 1-58; Figur *<br><br>-- | 1,4, 6-8 |
| | <u>US - A - 4 170 488</u> (M. NORMAN)<br><br>* Vorderseite; Spalte 2, Zeilen 6-66; Spalte 3, Zeilen 9-62; Figuren 1-5 *<br><br>-- | 1,4,7, 11 |
| A | <u>US - A - 2 970 620</u> (COLEMAN, R.A. et al.) | |
| A | <u>US - A - 3 106 731</u> (GARRIOTT, D. H.)<br><br>---- | |

**KLASSIFIKATION DER ANMELDUNG** (Int. Cl.³)

C 23 G 3/00
D 06 F 31/00
A 23 N 13/00
B 08 B 3/02

**RECHERCHIERTE SACHGEBIETE** (Int. Cl.³)

A 23 N
B 08 B
C 23 G
D 06 F

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-07-1981 | MUNZER |

EPA form 1503.1  06.78